# EUROPEAN PATENT APPLICATION

(11) **EP 1 225 531 A2**
(43) Date of publication of application: **24.07.2002**
(21) Application number: 02075232.5
(22) Date of filing: 22.01.2002
(51) Int. Cl.: G06F 17/60

(54) **Financial service system**

(30) Priority: 22.01.2001 NL 1017168; 20.01.2002 NL 1019793
(71) Applicant: DMC Groep N.V., 1096 ET Amsterdam (NL)
(72) Inventor: Tasche, Marcus Bernardus, 1100 AN Amsterdam (NL)
(74) Representative: Assendelft, Jacobus H.W.

(57) **Abstract**

Service system, with at least one central computer, connected to a general accessible network, e.g. the internet, scuh, that with a plurality participant or user PC's or equivalent, spread over the country, one can communicate via said network with said central computer, wherein said central computer is designed, e.g. programmed, to memorise user specific data from its computer memory after receival of input data, among which authorised login data, from a user PC, and to communicate these data to said user PC via the internet, wherein the computer memory contains data about financial products, e.g. life and damage insurances, mortgages, pensions, savings accounts, financings, banking services and investments, and for each user specific data of a sub group of said products, such that the central computer, by memorising data from its memory, can give an overview on the relevant user PC of the relevant sub group with corresponding user specific data, and wherein preferably the system is designed for exclusively on-line communication between the central computer and user PCs.

## Description

Mark B. Tasche has initiated the development of the franchising concept for financial services, particularly for consumers, named "MATRIKS", further discussed. With this description the scope of both the copy and patent protection for this franchising concept (hereafter named as "MATRIKS") is indicated.

MATRIKS introduces a novel way of distributing financial products. A novel way adapting to the changing client behaviour on the one hand and the possibilities offered by the internet on the other hand. All feasible financial products can be covered with MATRIKS , such as life and damage insurances, mortgages, pensions, savings accounts, financings, banking services and investment. MATRIKS is based on the until now not known appreciation that commonly the consumer pays a substantial part of his income to financial products (on average in the order of 15 to 25, usually ordered by 5 to 10 suppliers), while the consumer is hardly willing and/or in a position to search for a for him/her optimised financial service, and said consumer has a large desire for a reliable and simple integral overview of his own financial product set and the opportunity to make changes therein in a simple and reliable manner, which desire is in no way satisfied at this time.

In view of the above appreciation it is the object of MATRIKS to offer to its participants, i.e. customers, particularly consumers, of financial products, admitted to the MATRIKS service, a simple, reliable, optimised and integral financial service, wherein an integral overview of the individual product package is offered, the customer keeps complete freedom of choice between suppliers, and the customer is each time notified of the opportunity for a further optimisation of his financial product package. To be able to reliably provide this, it is assumed that the participants of MATRIKS must suffice a predetermined profile.

Thus it is suggested that each participant of MATRIKS obtains through the internet, locally on the own PC or equivalent, the integral overview of his own financial product package, independent from the suppliers from which said products are from; is notified of the opportunity to further optimise his financial product package; can make mutations in his financial product package himself; is offered the opportunity to communicate with his personal advisor.

Thus an always updated overview is offered to the participants of MATRIKS in an easy, local, on-line and supplier independent way, with complete transparency of the product information relevant to the participant, such as conditions, cost price, yield, etc., wherein the participant of MATRIKS can mutually compare similar products in a simple way locally on-line and can cancel on-line, add or replace a product while through the notification via the internet it is ensured that a possibly obtainable advantage will not escape from the attention of the participant. Since all relevant data are stored to be memorised by a computer through the internet, not only the participant, but also an authorised, such as an advisor, can be easily informed about the most recent status. In that way the participant can obtain a quick response to his requests.

In a prefered embodiment the participant automatically receives from MATRIKS a signal, e.g. by telephone, such as by a SMS-message, that there is possibly a for him/her interesting offer for an alternative product. In that way the participant is additionally stimulated to make contact with MATRIKS via the internet on short notice, to be notified in the desired manner. Thus a participant of MATRIKS is as quickly as possible informed about the for him/her possibly important developments about financial products.

To make MATRIKS as attractive as possible for the participants, a bonus point system can be added for each participant, e.g. based on the comission MATRIKS receives for the individual financial product package, wherein the thus collected bonus points can be used by the participant to buy preferably specialised financial advices. Thus a participant can obtain free financial taylor-made advice.

For MATRIKS, preferably use is made of a general data bank stored in a computer memory accessible via the internet, in which for each fanancial product for which MATRIKS is designed, the standard data, such as general conditions, contribution, own risk, interest level, ect. are stored per supplier. This general data bank is frequently updated such that it always contains the most recent product changes and product improvements. This updating can possibly be done by the relevant suplier. Also this general data bank contains per product and supplier preferably an independent quility opinion (e.g. made by a consumer lobby), on the basis of which a participant of MATRIKS can quickly carry out a fairly reliable product comparison. This quility opinion is e.g. based on 6 to 10 important aspects of the product type. Furthermore MATRIKS has for each participant a participant specific data base stored in a computer memory accessible via the internet, in which the participant specific data is updated, such as the financial products that he/she has, the relevant expiry date, further details, etc.

If a participant requests via the internet the overview of his/her package financial products, the computer links the general and participant specific databases to each other such that the overview offered to the participant always contains the most recent data. Also, the information is distributed in layers, i.e. the display of the participant first shows a basic screen with a short list of the products of this participant. By pointing at a detail on the display with the cursor, further information about it can be requested. By e.g. pointing at the quality opinion, subsequently an overview is presented of the aspects which played a role when making said quality opinion.

Preferably MATRIKS makes a comparison between the financial products of a participant and alternative financial products, whereafter on the basis of said comparison the participant is informed. Preferably said comparison is computer controlled, wherein the computer compares the data about alternative financial products in the general data base with each other. On the basis of said comparison the computer selects the most attractive alternatives with the aid of selection criteria. The computer also checks, if the selected products is present in the package of the participant. If not, it can be concluded that the participant has a less attractive product. The the computer places the corresponding data in the participant specific database, such that the participant can be informed about the attractive alternative selected by the computer. The participant can than decide, to change over to the alternative product.

In particular such comparison can be carried out computer controlled by mutual comparison of the given quality opinions. Is e.g. an alternative product with an equal of better quality opinion, the participant is correspondingly informed.

The ferquency with which the computer compares the products of the participant with the alternative products can be e.g. dependent from an event, such as nearing an expiry date of changing of residence of new job of the participant. In a prefered embodiment the computer only carries out such comparison when the quality opinion of one or more alternative products is changed. Also for this search the computer links the general data base with the participant specific data base.

Within MATRIKS a participant can completely independently make mutations to the relevant product. Preferably the participant only has to indicate his choice therefor. Dependent from said choice the new product is computer controlled requested with the relevant supplier and, after the confirmation of the relevant supplier is received, the possibly existing product is computer controlled cancelled. In the display overview of the participant the status of the relevant product is indicated (e.g. "request sent to institute" or "contract sent to client"), such that the participant can closely follow the developments.

Although it is expected that it is not required, for MATRIKS the possibility is left open to send to the participant the confirmation in writing of a mutation, e.g. the new policy and the cancellation of the old policy. In that case the computer provides preferably automatically a printing signal to a printer as soon as the mutation is processed by the computer, such that said written confirmation can be fabricated completely automatically.

Preferably MATRIKS offers via the internet an overview of specialised financial advisors, such as for mortgages, pension and annuity, asset management and inheritances. The use value of the overview for the participants is increased, by linking to each advisor a quality opinion made by the participants themselves.

In the following a further elaboration follows in relation to a presently prefered, non-limiting example of MATRIKS.

To be able to ensure a high and continuous increasing quality of the services by MATRIKS, a personal support of the participants is provided. For this, franchisers are appointed for MATRIKS which, a.o., monitor that of a new participant the existing financial products are entered in the participant specific database of MATRIKS, show the participants how to communicate with MATRIKS via the internet, give relevant advices and answers and take care of payments. For the payments e.g. a separate bank account is opened, to which a periodic automatic transfer from the salary account of the participant is made.

Now MATRIKS makes an overview of the financial products of this participant, which overview can be paged via the internet by the local PC or equivalent of the participant. For each product MATRIKS provides in the overview one or more alternative products with equal or better quality opinion. The franchiser can now go through this overview for the first time with the participant and immediately make possible mutations. Subsequently the franchiser periodically, e.g. each year, goes through the product package with the participant. Because of this combination of personal attention and computer controlled product overview, product information, advicing and mutation processing MATRIKS offers the client a unique service to manage his financial portfolio.

Since the franchiser provides a reliable overview of the product package of the participant, the former can timely bring the latter in contact with a specialised financial advisor. The advice of this advisor is, a.o., recorded in the participant specific database of MATRIKS, preferably in such a way that the participant merely has to enter his choice to carry out the advice. Thus the relevant participant can from behind his own PC or equivalent make decisions at a personally selected time.

Periodically, e.g. each 6 month, an enquiry is made among the participants, to monitor the quality of MATRIKS.

Thus MATRIKS provides a unique link between the customers and suppliers of financial products with via the internet making available of product overviews, general product information, advice and mutation processing.

The industrial applicability, required for granting a patent, is for MATRIKS ensured on the one hand since the data flow is machine controlled. On the other hand this is ensured for MATRIKS since evaluations by machine are carried out on the basis of which warning signals are given by machine, particularly in that the participant's attention is drawn to the opportunity to further optimise his product package.

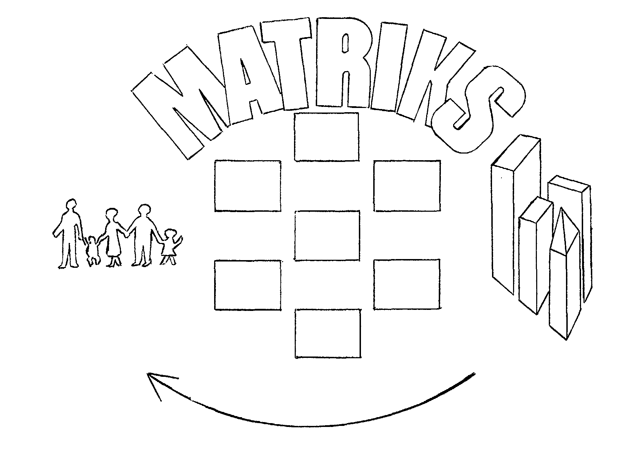

## Claims

1. Service system, with at least one central computer, connected to a general accessible network, e.g. the internet, scuh that with a plurality participant or user PC's or equivalent, spread over the country, one can communicate via said network with said central computer, wherein said central computer is designed, e.g. programmed, to memorise user specific data from its computer memory after receival of input data, among which authorised login data, from a user PC, and to communicate these data to said user PC via the internet, wherein the computer memory contains data about financial products, e.g. life and damage insurances, mortgages, pensions, savings accounts, financings, banking services and investments, and for each user specific data of a sub group of said products, such that the central computer, by memorising data from its memory, can give an overview on the relevant user PC of the relevant sub group with corresponding user specific data, and wherein preferably the system is designed for exclusively on-line communication between the central computer and user PCs.

2. System according to claim 1, wherein the computer memory contains of at least one, preferably all, financial products data of alternative product suppliers and wherein the central computer is designed to compare the products and possibly related user specific data of the sub group of each user with those of alternative suppliers, and to present the result of said comparison to the user PC.

3. System according to claim 2, wherein the computer memory of the alternative suppliers contains a relevant valuation and siad product comparison is carried out by comparing said valuations.

4. System according to claim 2 or 3, wherein the central computer is designed to, on the basis of said product comparison, send data to the user PC or an alternative user communication of interface means, e.g. user telephone, at a local site, such that the user is notified by acoustic and/or light signal (e.g. SMS message) from said communication means that the central computer has found in his computer memory a financial product from an alternative supplier more advantageous than the relevant one the relevant user has.

5. System according to any of claims 2-4, wherein the frequency with which the computer carries out the product comparison is dependent from a predetermined event, e.g. related to the relevant user or the product type.

6. System according to any of the preceeding claims, wherein the memory of the central computer contains a user specific bonus database, and wherein the central computer is designed to mutate, particularly increment, said bonus database, if it receives from the user PC a command to replace a user specific product in his computer memory by one from an alternative supplier, particularly the alternative supplier as a result of the comparison carried out by the computer.

7. System according to any of the precceding claims, wherein the computer memory contains a general and a specific database, wherein in said general database for each financial product the standard data, e.g. general conditions, contribution, own risk, interest level, ect., for each supplier is stored, and in the specific database user specific data is stored, such as the financial products that he/she has, the relating expiry date, further details, etc., and wherein the central computer is designed to, each time that a user PC requests a product overview with the central computer, memorise data from the general and for said user relevant data from the specific database and to combine them with each other into data for the product overview, and wherein preferably the computer memorises data from the general database to carry out the product comparison.

8. System according to any of the preceeding claims, wherein the central computer is designed to first send data to the user PC to generate a basic screen with display of all products related to the relevant user and to wait for predetermined input data from said user PC based on said basic screen to send, in response thereto, to the user PC additional data to generate a detail screen offering further data about a sub aspect from said basic screen.

9. System according to any of the preceding claims, wherein the computer memory contains a database with an overview of advisors, which database contains for each advisor quality data which are communicated by the central computer to a user PC with receipt of predetermined input, and wherein the central computer changes the quality data in the advisor database with predetermined input form the user PC.

10. System according to any of the preceeding claims, wherein on the basis of predetermined input from a user PC, the central computer takes care of requesting and/or cancelling of a product with a supplier, wherein preferably the central computer in his computer memory updates the status of the product requesting/cancelling and this, with relevant approach by a user PC, passes corresponding data thereto for display by the user PC and/or wherein in case of a mutation command sent from a user PC to the central computer, the central computer automatically sends a printing signal to a printer, to completely automatically make a written confirmation of the mutation.
